# EUROPEAN PATENT APPLICATION

(11) **EP 2 452 809 A1**
(43) Date of publication of application: **16.05.2012**
(21) Application number: 11188173.6
(22) Date of filing: 08.11.2011
(51) Int. Cl.: B29D 30/10, B29D 30/12

(54) **Segmented tire building core and method of making a tire**

(30) Priority: 11.11.2010 US 943962
(71) Applicant: The Goodyear Tire & Rubber Company, Akron, OH 44316-0001 (US)
(72) Inventor: Vargo, Richard David, Cuyahoga Falls, OH Ohio 44223 (US)
(74) Representative: Kutsch, Bernd

(57) **Abstract**

A segmented tire core structure (50) and methods of manufacturing a tire (10) using said structure are disclosed. The segmented tire core structure comprises a segmented tire core (60) upon which an associated tire can be cured, the segmented tire core comprising first (62) and second (64) sections; a segmented tire core removal system (100) comprising: a first wheel (106) having an axis of rotation; a first plurality of links (110) comprising: a first link pivotally attached to the first wheel and pivotally attached to a second link that is attached to the first section of the associated segmented tire core; a second wheel (108) having an axis of rotation; a second plurality of links (112) comprising: a first link pivotally attached to the second wheel and pivotally attached to a second link that is attached to the second section of the associated segmented tire core; wherein the first wheel is rotatable about its axis of rotation to cause the first and second links of the first plurality of links to move to consequently cause the first section to move away from an inner surface of the associated cured tire; and, wherein the second wheel is rotatable about its axis of rotation to cause the first and second links of the second plurality of links to move to consequently cause the second section to move away from the inner surface of the associated cured tire.

## Description

### I. Background

### A. Field of Invention

This invention generally relates to methods and an apparatus concerning tires and more specifically to methods and apparatuses concerning a segmented tire core structure used to make tires that can be easily removed from the cured tire.

### B. Description of the Related Art

It is long known to construct a green (uncured) tire on a tire building drum. The drum is then expanded in order to form the green tire into a toroidal contour. After the green tire has been built, it is taken to a tire curing press where it is shaped into a tire mold and then vulcanized to form a cured tire. While this method has been used for many years and generally works well for its intended purpose, it has disadvantages. One disadvantage is that the expansion of the green tire components on the drum and the shaping of the green tire within the tire mold make it difficult to maintain a high degree of tire uniformity.

To minimize this disadvantage, it is known in more recent years to construct the green tire on a segmented tire core that has the required toroidal shape. The tire core can then be transported to the tire curing press where the tire can be vulcanized without shaping. While known tire cores improve the uniformity of the tires they are used to produce, they have the disadvantage of being difficult to remove from the cured tire.

What is needed then is segmented tire core structure that can be used for the building and curing of tires but that is easy to remove from the cured tire.

### II. Summary

The invention relates to a method in accordance with claim 1 or 5 and to a segmented tire core structure in accordance with claim 11.

Dependent claims refer to preferred embodiments of the invention.

According to one embodiment of this invention, a method of making a tire may comprise the steps of: (A) providing a segmented tire core comprising: (1) at least one keystone section comprising: (a) a middle segment; (b) a first side segment; and, (c) a second side segment; and, (2) at least first and second non-keystone sections each comprising: (a) a middle segment; (b) a first side segment; and, (c) a second side segment; (B) providing a segmented tire core removal system comprising: (1) a keystone section removal system comprising: (a) a first wheel; (b) a plurality of links that connect the first wheel to the middle, the first side, and the second side segments of the keystone section; and, (2) a non-keystone section removal system comprising: (a) a second wheel; (b) a plurality of links that connect the second wheel to the middle, the first side, and the second side segments of the first non-keystone section; and, (c) a plurality of links that connect the second wheel to the middle, the first side, and the second side segments of the second non-keystone section; (C) building a green tire on the segmented tire core wherein: (1) outer surfaces of the middle segments of the keystone section, the first non-keystone section, and the second non-keystone section together define an inner surface of a crown region of the green tire; (2) outer surfaces of the first side segments of the keystone section, the first non-keystone section, and the second non-keystone section together define an inner surface of a first side wall of the green tire; and, (3) outer surfaces of the second side segments of the keystone section, the first non-keystone section, and the second non-keystone section together define an inner surface of a second side wall of the green tire; (D) curing the green tire into a cured tire while on the segmented tire core; and, (E) removing the segmented tire core from the cured tire with the segmented tire core removal system using the steps of: (1) rotating the first wheel to move the plurality of links of the keystone section removal system to: (a) move the middle segment of the keystone section away from the inner surface of the crown region of the cured tire; (b) move the first side segment of the keystone section away from the inner surface of the first side wall of the cured tire; (c) move the second side segment of the keystone section away from the inner surface of the second side wall of the cured tire; and, (d) move the middle, the first side, and the second side segments of the keystone section from between the first and second side walls of the cured tire; and, (2) rotating the second wheel to move the plurality of links of the non-keystone section removal system to: (a) remove the middle segments of the first and second non-keystone sections away from the inner surface of the crown region of the cured tire; (b) remove the first side segments of the first and second non-keystone sections away from the inner surface of the first side wall of the cured tire; (c) remove the second side segments of the first and second non-keystone sections away from the inner surface of the second side wall of the cured tire; and, (d) remove the middle, the first side, and the second side segments of the first and second non-keystone sections from between the first and second side walls of the cured tire.

According to another embodiment of this invention, a segmented tire core structure may comprise: a segmented tire core upon which an associated tire is cured, the segmented tire core comprising first and second sections; a segmented tire core removal system comprising: a first wheel having an axis of rotation; a first plurality of links comprising: a first link pivotally attached to the first wheel and pivotally attached to a second link that is attached to the first section of the associated segmented tire core; a second wheel having an axis of rotation; and, a second plurality of links comprising: a first link pivotally attached to the second wheel and pivotally attached to a second link that is attached to the second section of the associated segmented tire core. The first wheel may be rotatable about its axis of rotation to cause the first and second links of the first plurality of links to move to consequently cause the first section to move away from an inner surface of the associated cured tire. The second wheel may be rotatable about its axis of rotation to cause the first and second links of the second plurality of links to move to consequently cause the second section to move away from the inner surface of the associated cured tire.

According to yet another embodiment of this invention, a method of making a tire may comprise the steps of: (A) providing a segmented tire core comprising first and second sections; (B) providing a segmented tire core removal system comprising: (1) a first wheel having an axis of rotation; (2) a first plurality of links comprising: a first link pivotally attached to the first wheel and pivotally attached to a second link that is attached to the first section of the associated segmented tire core; (3) a second wheel having an axis of rotation; and, (4) a second plurality of links comprising: a first link pivotally attached to the second wheel and pivotally attached to a second link that is attached to the second section of the associated segmented tire core; (C) building a green tire on the segmented tire core wherein outer surfaces of the first and second sections together define an inner surface of the green tire; (D) curing the green tire into a cured tire while on the segmented tire core; and, (E) removing the first and second sections from the cured tire with the segmented tire core removal system using the steps of: (1) rotating the first wheel about its axis of rotation to cause the first and second links of the first plurality of links to move to consequently cause the first section to move away from the inner surface of the associated cured tire; and, (2) rotating the second wheel about its axis of rotation to cause the first and second links of the second plurality of links to move to consequently cause the second section to move away from the inner surface of the associated cured tire.

One advantage of this invention is tires can be made with improved uniformity on a segmented tire core.

Another advantage of this invention is that a segmented tire core can be easily removed from a cured tire.

Other benefits and advantages of the invention will become apparent to those skilled in the art to which it pertains upon a reading and understanding of the following detailed specification.

### III. Brief Description of the Drawings

The invention may take physical form in certain parts and arrangement of parts, embodiments of which will be described in detail in this specification and illustrated in the accompanying drawings which form a part hereof and wherein:
FIGURE 1 is a cross-section view of a first example tire constructed in accordance with this invention.
FIGURE 2 is a schematic representation of a segmented tire core structure showing the first sections attached to a wheel.
FIGURE 3 is a cross-section view of a segmented tire core positioned fully against a cured tire.
FIGURE 4 is a similar view to that shown in FIGURE 3 but showing the middle segment pulled away from the tire.
FIGURE 5 is a similar view to that shown in FIGURE 4 but showing the first side segment pulled away from the tire.
FIGURE 6 is a similar view to that shown in FIGURE 5 but showing the second side segment pulled away from the tire and showing the segmented tire core is position to be removed from the tire.
FIGURE 7 is a similar view to that shown in FIGURE 6 but showing the segmented tire core primarily removed from the tire.
FIGURE 8 is a similar view to that shown in FIGURE 2 but showing the first sections positioned radially inward.
FIGURE 9 is a similar view to that shown in FIGURE 2 but showing the second sections attached to a wheel.
FIGURE 10 is a similar view to that shown in FIGURE 9 but showing the second sections positioned radially inward.
FIGURE 11 is a schematic representation of a segmented tire core structure being removed from opposite axial sides of a tire.

### IV. Definitions

"Axial" and "axially" mean lines or directions that are parallel to the axis of rotation of the tire.

"Bead" means that part of the tire comprising an annular tensile member and shaped to fit the design rim.

"Carcass" means the tire structure apart from the belt structure, tread, undertread, and sidewall rubber, but including the beads and plies.

"Circumferential" means lines or directions extending along the perimeter of the surface of the annular tread perpendicular to the axial direction.

"Cord" means one of the reinforcement strands of which the plies in the tire are comprised.

"Inner Liner" means the layer or layers of elastomer or other material that form the inside surface of a tubeless tire and that contain the inflating fluid within the tire.

"Ply" means a continuous layer of rubber-coated parallel cords.

"Radial" and "radially" mean directions radially toward (inward) or away from (outward) the axis of rotation of the tire.

"Radial tire" means a belted or circumferentially-restricted pneumatic tire in which the ply cords (which may or may not extend from bead to bead) are laid at cord angles between 65 degrees and 90 degrees with respect to the equatorial plane of the tire.

"Tread" means a molded rubber component which, when bonded to the rest of the tire, includes that portion of the tire that comes into contact with the road when the tire is normally inflated and under normal load, that is, the footprint.

### V. Detailed Description of Example Embodiments of the Invention

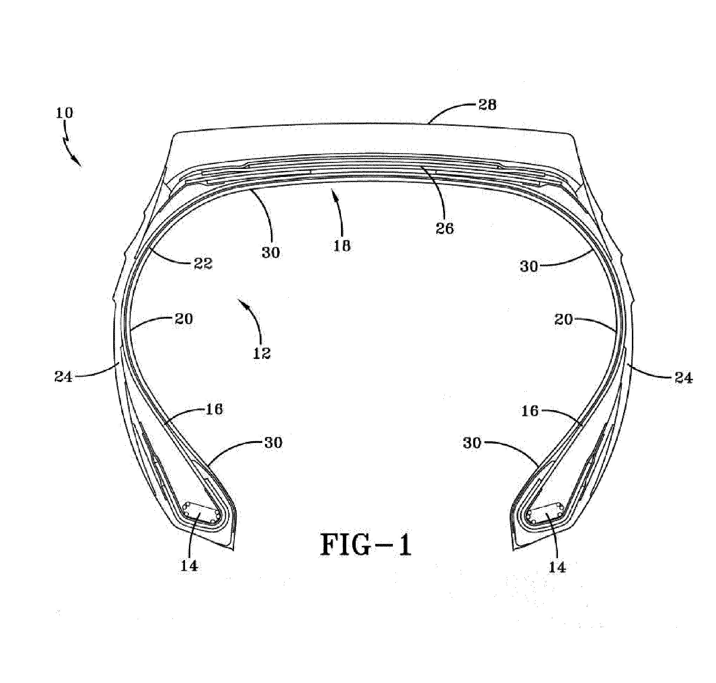

Referring now to the drawings wherein the showings are for purposes of illustrating embodiments of the invention, and wherein like reference numerals are understood to refer to like components, FIGURE 1 shows a cross-sectional view of a tire 10 built on a segmented tire core structure according to one embodiment of this invention. While the tire shown is a pneumatic radial tire, it should be understood that any tire, chosen with the sound judgment of a person of skill in the art, can be made with this invention. The tire 10 may have a carcass 12 that may include a pair of annular beads 14, 14 and one or more plies 16 that may extend from around the beads 14, 14, as shown. The carcass 12 may define a crown region 18 and a pair of sidewalls 20, 20. Other conventional components may be positioned on the carcass 12 such as an inner liner 22, sidewall rubber portions 24, 24, a belt package 26 and a tread 28. As shown, the tire 10 may have an inner surface 30 with a general toroidal shape that extends along one sidewall 20, the crown region 18 and along the opposite sidewall 20. Because a tire carcass and these other components are well known to those of skill in the art, further details will not be provided except as noted below.

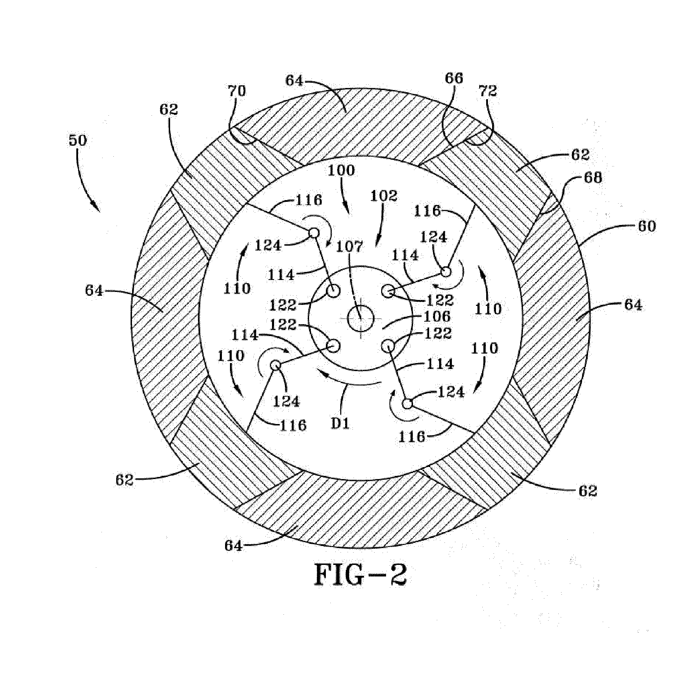

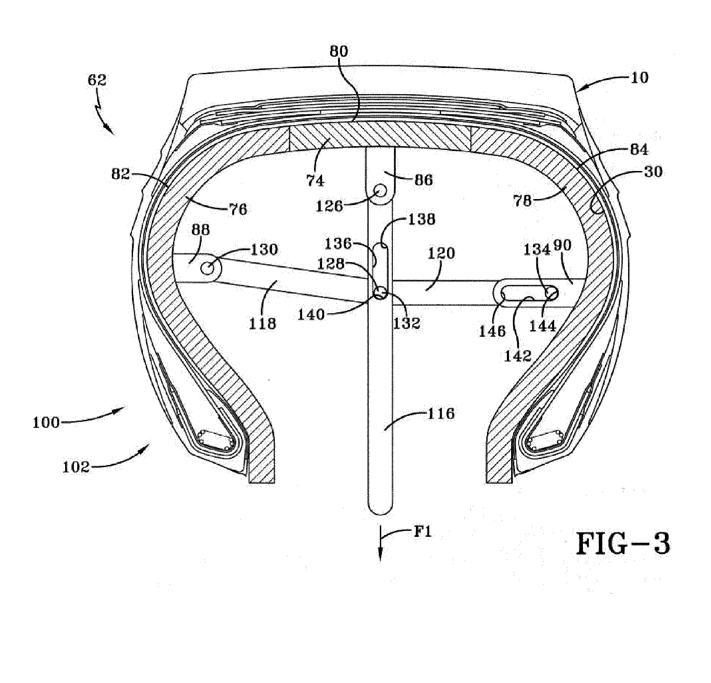

With reference now to FIGURES 2-3 and 9, a segmented tire core structure 50 may include a segmented tire core 60, upon which the tire is built and cured, and a segmented tire core removal system 100 which is used to remove the segmented tire core 60 from the cured tire 10. The segmented tire core 60 may include first and second sections 62, 64 positioned around the circumference of the segmented tire core 60. While four first sections 62 and four second sections 64 are shown, it should be understood that the number and type of first and second sections 62, 64 used with this invention can be any chosen with the judgment of a person of skill in the art. Because the tire 10 forms a radial outer boundary for the segmented tire core 60, as shown in FIGURE 3, the sections 62, 64 must be moved radially inward to remove the segmented tire core 60. For the embodiment shown, the first sections 62 are keystone sections and the second sections 64 are non-keystone sections. When removing the segmented tire core 60 from the tire 10, at least one keystone section 62 must be moved (radially inward) before any of the non-keystone sections 64 can be moved. For this reason each keystone section 62 has circumferential edges 66, 68 that are angled outward (from an outer radial position to an inner radial position) while each non-keystone section 64 has circumferential edges 70, 72 that are angled inward (from an outer radial position to an inner radial position).

With reference now to FIGURES 2-3, each section 62, 64 of the segmented tire core 60 may be formed of any number, type and shape of segments chosen with the judgment of a person of skill in the art. For the embodiment shown, each section 62, 64 may include a middle segment 74, a first side segment 76 and a second side segment 78. Each of these segments 74, 76, 78 may have a corresponding outer surface 80, 82, 84, respectively, that is shaped to contact and thus form or define the inner surface 30 of the tire 10. Specifically, the outer surfaces 80 of the middle segments 74 for all the sections 62, 64 together are shaped to contact and define the crown region 18 of the tire inner surface 30. Similarly, the outer surfaces 82 of the first side segments 76 for all the sections 62, 64 together are shaped to contact and define one sidewall 20 of the tire inner surface 30 and the outer surfaces 84 of the second side segments 78 for all the sections 62, 64 together are shaped to contact and define the other sidewall 20 of the tire inner surface 30. In one embodiment, shown, each segment 74, 76, 78 may have a corresponding tab 86, 88, 90, respectively, positioned on the opposite side of the corresponding outer surface 80, 82, 84 for use in connecting to the segmented tire core removal system 100, as will be discussed further below.

With reference now to FIGURES 2-3 and 9, the segmented tire core removal system 100 may include a first section removal system 102 that is used to remove the first section(s) 62 of the segmented tire core 60 and a second section removal system 104 that is used to remove the second section(s) 64 of the segmented tire core 60. Each section removal system 102, 104 may include a wheel 106, 108, respectively, and a plurality of links 110, 112, respectively, that connect the corresponding wheel 106, 108 to the corresponding section(s) 62, 64 of the segmented tire core 60. Each wheel 106, 108 may have a corresponding axis of rotation 107, 109, respectively, about which the corresponding wheel rotates. In one embodiment, the axis of rotation 107 of the wheel 106 and the axis of rotation 109 of wheel 109 are substantially collinear prior to rotation of the wheels 106, 108. Each axis of rotation 107, 109 may include an axle (not shown) and may include bearings (not shown). As the details for forming an axis of rotation for a wheel are well known to those of skill in the art, further details will not be provided here.

With continuing reference to FIGURES 2-3 and 9, the number and type of individual links used may be any chosen with the judgment of a person of skill in the art. For the embodiment shown, each section removal system 102, 104 may include specific links for each section 62, 64. A first link 114 may be pivotally attached at pivot connection 122 to the corresponding wheel 106, 108 and may be pivotally attached at pivot connection 124 to a second link 116. The second link 116 may be pivotally attached at pivot connection 126 to the tab 86 of the middle segment 74. A third link 118 may be pivotally attached at pivot connection 128 to the second link 116 and may be pivotally attached at pivot connection 130 to the tab 88 of the first side segment 76. Similarly, a fourth link 120 may be pivotally attached at pivot connection 132 to the second link 116 and may be pivotally attached at pivot connection 134 to the tab 90 of the second side segment 78. In one embodiment, shown, the pivot connections 128, 132 are collinear.

With reference now to FIGURE 3, to increase the degrees of freedom for each section removal system 102, 104, one or more of the pivot connections, chosen with the judgment of a person of skill in the art, may be positioned to slide within a slot. For the embodiment shown, the pivot connections 128, 132 may slide within slot 136 formed in the second link 116 between first and second ends 138, 140. As is also shown, the pivot connection 134 may slide within slot 142 formed in the tab 90 between first and second ends 144, 146. The slots 136, 142 may be shaped and sized in any manner chosen with the judgment of a person of skill in the art.

With reference now to FIGURES 2-3, method steps for making a tire 10 on the segmented tire core structure 50 and then removing the segmented tire core structure 50 from the tire 10 will now be described. First, a green tire is built on the segmented tire core 60. As the building of a green tire on a segmented tire core is well known to those of skill in the art, it will not be explained here. Next, the green tire is vulcanized into a cured tire 10 while on the segmented tire core 60. This vulcanizing step is also well known to those of skill in the art and thus will not be explained here.

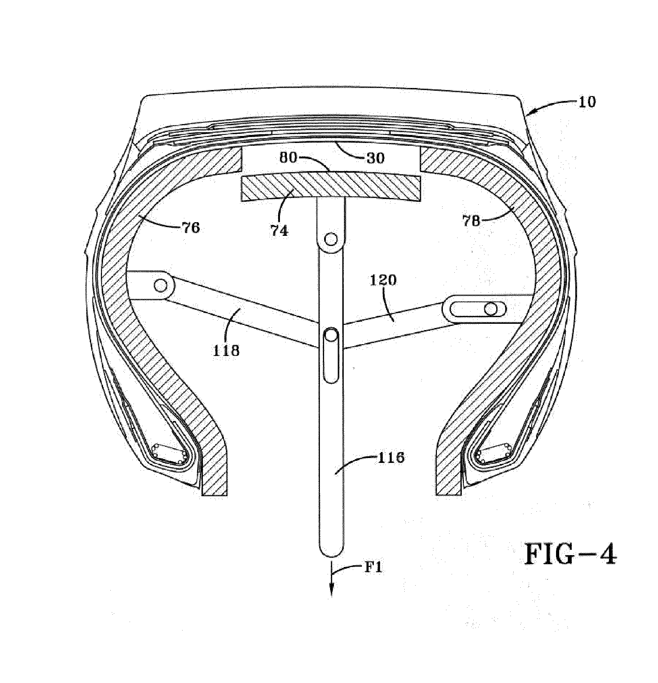

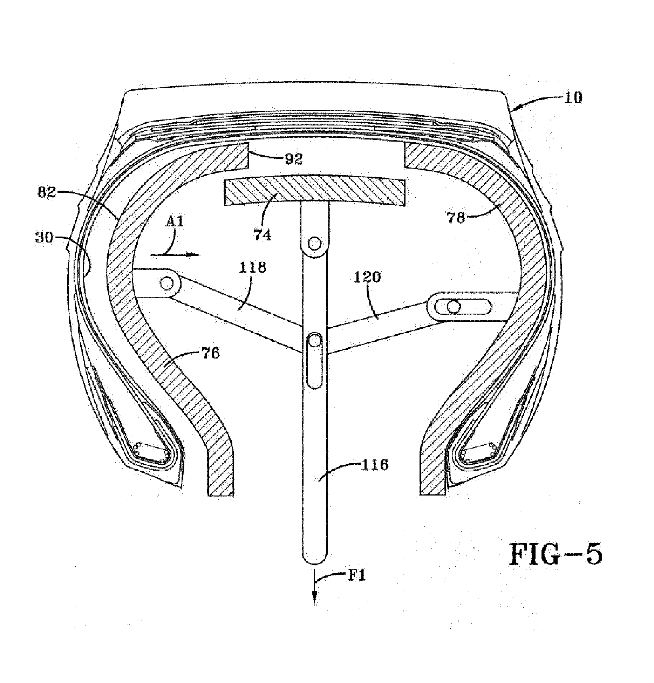

With reference now to FIGURE 2, the segmented tire core 60 is then removed from the cured tire 10 using the segmented tire core removal system 100. If the first section(s) 62 is a keystone section, then it needs to be moved first. To move the first section(s) 62, the wheel 106 is rotated about its axis of rotation 107 to move the plurality of links 110. The wheel 106 may be rotated by a motor (not shown) or by any other means chosen with the judgment of a person of skill in the art. As the wheel 106 is rotated (in clockwise direction D1 as shown in FIGURE 2), the first link 114 rotates about pivot connection 122 and a radially inward force F1, see FIGURE 3, is applied to the second link 116. This force F1 first causes, as shown in FIGURE 4, the middle segment 74 to move radially inward away from the inner surface 30 of the crown region 18 of the cured tire 10. The third and fourth links 118, 120, may pivot about their pivot connections 128, 130, 132, 134 as the middle segment 74 is moving. If necessary, the pivot connection 134 may also slide within slot 142. Continued rotation of the wheel 106 (and thus continued application of radially inward force F1 on the second link 116) continues to move the middle segment 74 radially inward but also causes, as shown in FIGURE 5, the third link 118 to pull the first side segment 76 away from the inner surface 30 of the first side wall 20 of the cured tire 10. This initial movement of the first side segment 76 is in axial direction A1 (FIGURE 5) and does not create an interference problem because the radially outward edge 92 of the first side segment 76 is positioned radially outward of the middle segment 74, as shown.

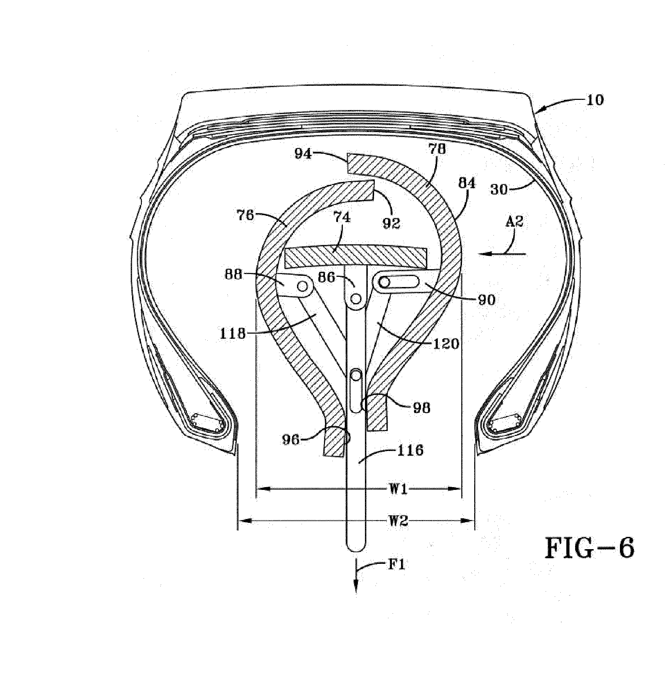

With reference now to FIGURES 2 and 6, continued rotation of the wheel 106 (and thus continued application of radially inward force F1 on the second link 116) continues to move the middle segment 74 radially inward, continues to pull the first side segment 76 away from the inner surface 30 of the first side wall 20 of the cured tire 10 but also causes, as shown in FIGURE 6, the fourth link 120 to pull the second side segment 78 away from the inner surface 30 of the second side wall 20 of the cured tire 10. Continued rotation of the wheel 106 (and thus continued application of radially inward force F1 on the second link 116) continues to move the middle segment 74 radially inward, continues to pull the first side segment 76 away from the inner surface 30 of the first side wall 20, continues to pull the second side segment 78 away from the inner surface 30 of the second side wall 20 but also causes the first section 62 to move radially inward, together with the section removal system 102, as shown in FIGURE 6. The movement of the second side segment 78 in axial direction A2 does not create an interference problem because the radially outward edge 94 of the second side segment 78 is positioned radially outward of both the radially outward edge 92 of the first side segment 76 and the middle segment 74, as shown.

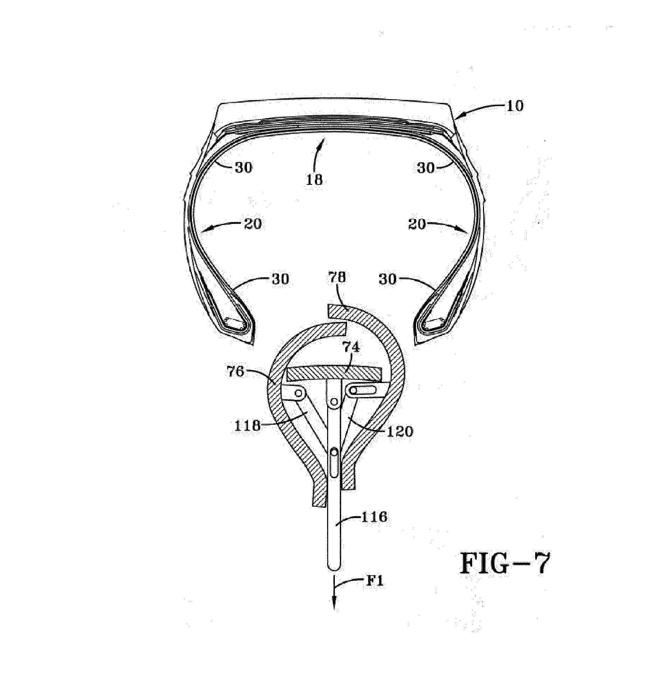

With reference now to FIGURES 2 and 6-7, continued rotation of the wheel 106 (and thus continued application of radially inward force F1 on the second link 116) causes the first and second side segments 76, 78 to move axially inward until corresponding radially inward edges 96, 98 contact sides of the second link 116, as shown in FIGURE 6, and causes the first section 62 to move radially inward. Note that, for the embodiment shown, the tabs 88, 90 are positioned radially inward of the middle segment 74 (other than the tab 86). Note also that the axial width W1 of the first section 62 is smaller than the axial width W2 of the smallest opening in the tire 10 (that is, from between the inner surfaces of the beads 14, 14 of the cured tire 10). As a result, the first section 62 and the section removal system 102 can be easily removed together (in the axially inward direction) from the tire 10, as shown in FIGURE 7. The movements of the segments 74, 76, 78 and links 114, 116, 118, 120 just described may also include the following motions, where necessary: the first link 114 may rotate about pivot connection 122; the second link 116 may rotate about pivot connection 124; the third and fourth links 118, 120, may pivot about their pivot connections 128, 130, 132, 134; the pivot connection 134 may slide within slot 142; and, the pivot connections 128, 132 may slide within slot 136.

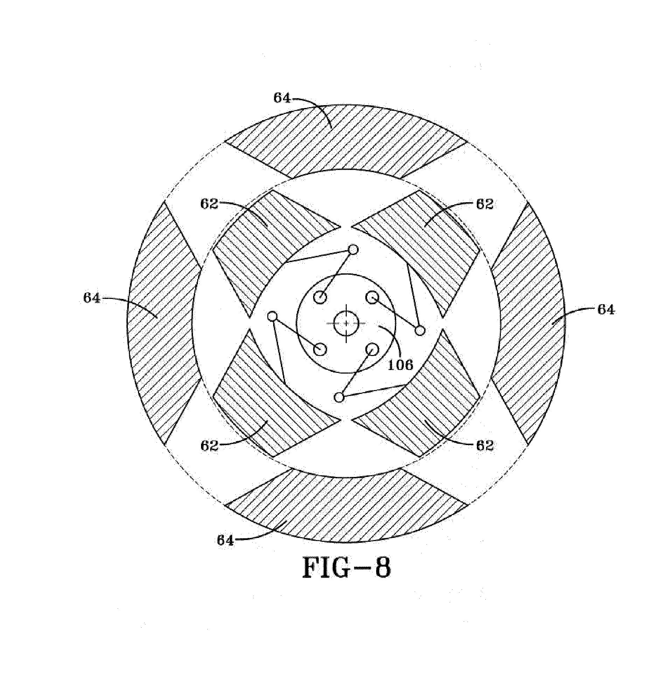

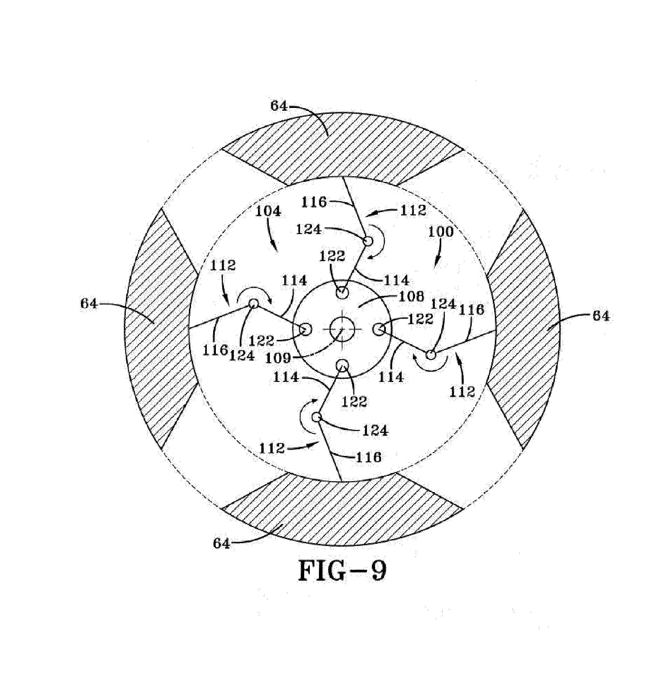

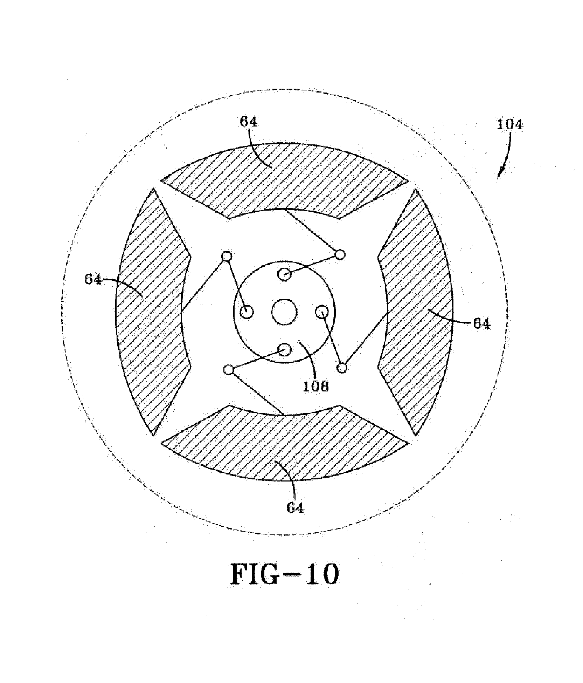

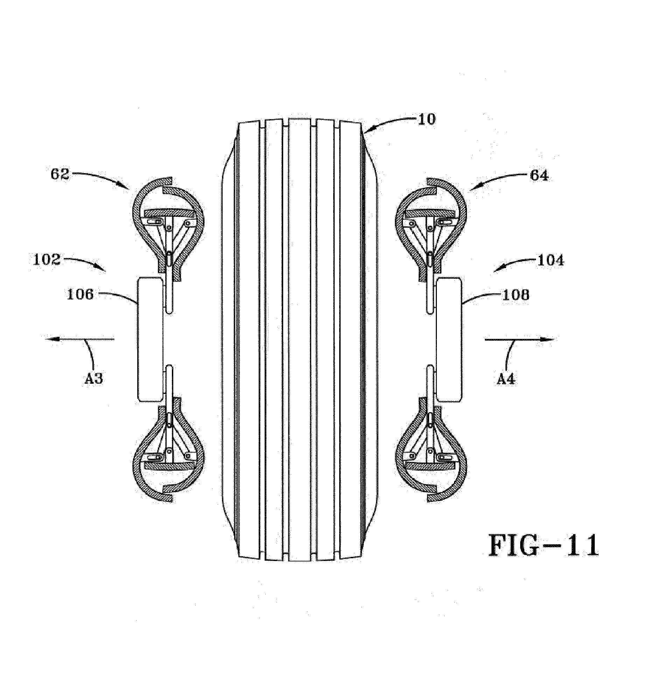

It should be noted that the movements described above for a single section 62 also apply to multiple sections 62 as shown in FIGURE 2 with a plurality of links used to connect each section to the wheel. Once the first sections 62 are moved radially inward, as shown in FIGURE 8, the wheel 108 can be rotated and the corresponding plurality of links 112 can be moved to move the second sections 64 from the positions shown in FIGURE 9 to the positions shown in FIGURE 10. The wheel 108 and plurality of links 112 operate the same as the wheel 106 and plurality of links 110 so further details of their operation will not be discussed here. Once both sections 62, 64 have been moved radially inward away from the tire 110, as shown in FIGURE 11, they along with the removal systems 102, 104 can then be moved in opposite axial directions A3 and A4 completely away from the tire 10. This axial movement of the sections 62, 64 and removal systems 102, 104 can be accomplished in any manner chosen with the sound judgment of a person of skill in the art.

## Claims

1. A method of making a tire, the method comprising the steps of:
(A) providing a segmented tire core comprising:
(1) at least one keystone section comprising a middle segment, a first side segment and a second side segment, and
(2) at least first and second non-keystone sections each comprising a middle segment, a first side segment and a second side segment;
(B) providing a segmented tire core removal system comprising:
(1) a keystone section removal system comprising a first wheel, a plurality of links that connect the first wheel to the middle, the first side, and the second side segments of the keystone section, and
(2) a non-keystone section removal system comprising a second wheel, a plurality of links that connect the second wheel to the middle, the first side, and the second side segments of the first non-keystone section, and a plurality of links that connect the second wheel to the middle, the first side, and the second side segments of the second non-keystone section;
(C) building a green tire on the segmented tire core wherein:
(1) outer surfaces of the middle segments of the keystone section, the first non-keystone section, and the second non-keystone section together define an inner surface of a crown region of the green tire,
(2) outer surfaces of the first side segments of the keystone section, the first non-keystone section, and the second non-keystone section together define an inner surface of a first side wall of the green tire, and
(3) outer surfaces of the second side segments of the keystone section, the first non-keystone section, and the second non-keystone section together define an inner surface of a second side wall of the green tire;
(D) curing the green tire into a cured tire while on the segmented tire core;
and
(E) removing the segmented tire core from the cured tire with the segmented tire core removal system using the steps of:
(1) rotating the first wheel to move the plurality of links of the keystone section removal system to (a) move the middle segment of the keystone section away from the inner surface of the crown region of the cured tire, (b) move the first side segment of the keystone section away from the inner surface of the first side wall of the cured tire, (c) move the second side segment of the keystone section away from the inner surface of the second side wall of the cured tire, and (d) move the middle, the first side, and the second side segments of the keystone section from between the first and second side walls of the cured tire, and
(2) rotating the second wheel to move the plurality of links of the non-keystone section removal system to (a) remove the middle segments of the first and second non-keystone sections away from the inner surface of the crown region of the cured tire (b) remove the first side segments of the first and second non-keystone sections away from the inner surface of the first side wall of the cured tire, (c) remove the second side segments of the first and second non-keystone sections away from the inner surface of the second side wall of the cured tire, and (d) remove the middle, the first side, and the second side segments of the first and second non-keystone sections from between the first and second side walls of the cured tire.

2. The method of claim 1 wherein steps (E)(1)(a), (E)(1)(b), (E)(1)(c), and (E)(1)(d) are done sequentially and steps (E)(2)(a), (E)(2)(b), (E)(2)(c) and, (E)(2)(d) are done sequentially, and, optionally, wherein step (E)(1) is started before step (E)(2) is started.

3. The method of claim 1 or 2 wherein step (E) further comprises the steps of:
moving the keystone section removal system and the keystone section of the segmented tire core together away from the tire in a first axial direction, and
moving the non-keystone section removal system and non-keystone section removal system of the segmented tire together away from the tire in a second axial direction that is substantially opposite the first axial direction, and, optionally,
wherein prior to the step of moving the keystone section removal system and the keystone section of the segmented tire core together away from the tire in a first axial direction, step (E) comprises the step of moving the keystone section removal system and the keystone section of the segmented tire core together away from the tire in a radially inward direction, and prior to the step of moving the non-keystone section removal system and non-keystone section removal system of the segmented tire together away from the tire in a second axial direction that is substantially opposite the first axial direction, step (E) comprises the step of moving the non-keystone section removal system and non-keystone section removal system of the segmented tire together away from the tire in a radially inward direction.

4. The method of claim 1 or 3 wherein step (B) comprises the steps of:
providing the plurality of links of the keystone section removal system with a first link pivotally attached to the first wheel and pivotally attached to a second link that is attached to the middle segment of the keystone section, a third link that is pivotally attached to the second link and attached to the first side segment of the keystone section, and a fourth link that is pivotally attached to the second link and attached to the second side segment of the keystone section,
providing the plurality of links of the non-keystone section removal system that connects the second wheel to the middle, the first side, and the second side segments of the first non-keystone section with a first link pivotally attached to the second wheel and pivotally attached to a second link that is attached to the middle segment of the first non-keystone section, a third link that is pivotally attached to the second link and attached to the first side segment of the first non-keystone section, and a fourth link that is pivotally attached to the second link and attached to the second side segment of the first non-keystone section, and
providing the plurality of links of the non-keystone section removal system that connects the second wheel to the middle, the first side, and the second side segments of the second non-keystone section with a first link pivotally attached to the second wheel and pivotally attached to a second link that is attached to the middle segment of the second non-keystone section, a third link that is pivotally attached to the second link and attached to the first side segment of the second non-keystone section, and, a fourth link that is pivotally attached to the second link and attached to the second side segment of the second non-keystone section.

5. A method of making a tire, the method comprising the steps of:
(A) providing a segmented tire core comprising first and second sections;
(B) providing a segmented tire core removal system comprising a first wheel having an axis of rotation, a first plurality of links comprising a first link pivotally attached to the first wheel and pivotally attached to a second link that is attached to the first section of the associated segmented tire core, a second wheel having an axis of rotation, and a second plurality of links comprising: a first link pivotally attached to the second wheel and pivotally attached to a second link that is attached to the second section of the associated segmented tire core;
(C) building a green tire on the segmented tire core wherein outer surfaces of the first and second sections together define an inner surface of the green tire;
(D) curing the green tire into a cured tire while on the segmented tire core;
and
(E) removing the first and second sections from the cured tire with the segmented tire core removal system using the steps of (1) rotating the first wheel about its axis of rotation to cause the first and second links of the first plurality of links to move to consequently cause the first section to move away from the inner surface of the associated cured tire, and (2) rotating the second wheel about its axis of rotation to cause the first and second links of the second plurality of links to move to consequently cause the second section to move away from the inner surface of the associated cured tire.

6. The method of claim 5 wherein step (E)(1) is started before step (E)(2) is started.

7. The method of claim 5 or 6 wherein step (E) further comprises the steps of:
moving the first wheel, the first plurality of links and the first section of the segmented tire core together away from the tire in a first axial direction, and
moving the second wheel, the second plurality of links and the second section of the segmented tire together away from the tire in a second axial direction that is substantially opposite the first axial direction, and, optionally,
wherein prior to the step of, moving the first wheel, the first plurality of links and the first section of the segmented tire core together away from the tire in a first axial direction, step (E) comprises the step of: moving the first wheel, the first plurality of links and the first section of the segmented tire core together away from the tire in a radially inward direction, and, also optionally,
prior to the step of, moving the second wheel, the second plurality of links and the second section of the segmented tire together away from the tire in a second axial direction that is substantially opposite the first axial direction, step (E) comprises the step of: moving the second wheel, the second plurality of links and the second section of the segmented tire core together away from the tire in a radially inward direction.

8. The method of claim 5 wherein:
step (A) comprises the steps of providing the first section with first and second segments and providing the second section with first and second segments;
step (B) comprises the steps of providing the second link of the first plurality of links to be pivotally attached to the first segment of the first section, providing the first plurality of links with a third link that is pivotally attached to the second link of the first plurality of links and pivotally attached to the second segment of the first section, providing the second link of the second plurality of links to be pivotally attached to the first segment of the second section, and providing the second plurality of links with a third link that is pivotally attached to the second link of the second plurality of links and pivotally attached to the second segment of the second section, and
step (E) comprises the steps of rotating the first wheel about its axis of rotation to cause the first, second and third links of the first plurality of links to move to consequently cause the first and second segments of the first section to move away from the inner surface of the associated cured tire, and rotating the second wheel about its axis of rotation to cause the first, second and third links of the second plurality of links to move to consequently cause the first and second segments of the second section to move away from the inner surface of the associated cured tire.

9. The method of making a tire of claim 8 wherein:
step (A) comprises the steps of providing the first segment of the first section to contact a crown region of the associated tire, providing the second segment of the first section to contact a first side wall of the associated tire, providing the first section with a third segment that contacts a second side wall of the associated tire, providing the first segment of the second section to contact a crown region of the associated tire, providing the second segment of the second section to contact a first side wall of the associated tire, providing the second section with a third segment that contacts a second side wall of the associated tire,
step (B) comprises the steps of providing the first plurality of links with a fourth link that is pivotally attached to the second link of the first plurality of links and pivotally attached to the third segment of the first section, and providing the second plurality of links with a fourth link that is pivotally attached to the second link of the first plurality of links and pivotally attached to the third segment of the first section, and,
step (E) comprises the steps of rotating the first wheel about its axis of rotation to cause the first, second, third and fourth links of the first plurality of links to move to consequently cause the first, second and third segments of the first section to move away from the inner surface of the associated cured tire, and rotating the second wheel about its axis of rotation to cause the first, second, third and fourth links of the second plurality of links to move to consequently cause the first, second and third segments of the second section to move away from the inner surface of the associated cured tire.

10. The method of making a tire of claim 5 wherein:
step (A) comprises the step of providing the segmented tire core with third and fourth sections;
step (B) comprises the steps of providing a third plurality of links comprising:
a first link pivotally attached to the first wheel and pivotally attached to a second link that is attached to the third section of the associated segmented tire core, and
providing a fourth plurality of links comprising: a first link pivotally attached to the second wheel and pivotally attached to a second link that is attached to the fourth section of the associated segmented tire core; and
step (E) comprises the steps of rotating the first wheel about its axis of rotation to cause the first and second links of the third plurality of links to move to consequently cause the third section to move away from the inner surface of the associated cured tire, and rotating the second wheel about its axis of rotation to cause the first and second links of the fourth plurality of links to move to consequently cause the fourth section to move away from the inner surface of the associated cured tire.

11. A segmented tire core structure comprising:
a segmented tire core upon which an associated tire can be cured, the segmented tire core comprising first and second sections;
a segmented tire core removal system comprising:
a first wheel having an axis of rotation;
a first plurality of links comprising: a first link pivotally attached to the first wheel and pivotally attached to a second link that is attached to the first section of the associated segmented tire core;
a second wheel having an axis of rotation;
a second plurality of links comprising: a first link pivotally attached to the second wheel and pivotally attached to a second link that is attached to the second section of the associated segmented tire core;
wherein the first wheel is rotatable about its axis of rotation to cause the first and second links of the first plurality of links to move to consequently cause the first section to move away from an inner surface of the associated cured tire; and,
wherein the second wheel is rotatable about its axis of rotation to cause the first and second links of the second plurality of links to move to consequently cause the second section to move away from the inner surface of the associated cured tire.

12. The segmented tire core structure of claim 11 wherein:
the first section comprises first and second segments;
the second section comprises first and second segments;
the second link of the first plurality of links is pivotally attached to the first segment of the first section;
the first plurality of links further comprises: a third link that is pivotally attached to the second link of the first plurality of links and pivotally attached to the second segment of the first section;
the second link of the second plurality of links is pivotally attached to the first segment of the second section;
the second plurality of links further comprises: a third link that is pivotally attached to the second link of the second plurality of links and pivotally attached to the second segment of the second section;
wherein the first wheel is rotatable about its axis of rotation to cause the first, second and third links of the first plurality of links to move to consequently cause the first and second segments of the first section to move away from the inner surface of the associated cured tire; and
wherein the second wheel is rotatable about its axis of rotation to cause the first, second and third links of the second plurality of links to move to consequently cause the first and second segments of the second section to move away from the inner surface of the associated cured tire,

13. The segmented tire core structure of claim 11 or 12 wherein:
the first segment of the first section contacts a crown region of the associated tire;
the second segment of the first section contacts a first side wall of the associated tire;
the first section further comprises a third segment that contacts a second side wall of the associated tire;
the first segment of the second section contacts a crown region of the associated tire;
the second segment of the second section contacts a first side wall of the associated tire;
the second section further comprises a third segment that contacts a second side wall of the associated tire;
the first plurality of links further comprises: a fourth link that is pivotally attached to the second link of the first plurality of links and pivotally attached to the third segment of the first section;
the second plurality of links further comprises: a fourth link that is pivotally attached to the second link of the first plurality of links and pivotally attached to the third segment of the first section;
wherein the first wheel is rotatable about its axis of rotation to cause the first, second, third and fourth links of the first plurality of links to move to consequently cause the first, second and third segments of the first section to move away from the inner surface of the associated cured tire; and
wherein the second wheel is rotatable about its axis of rotation to cause the first, second, third and fourth links of the second plurality of links to move to consequently cause the first, second and third segments of the second section to move away from the inner surface of the associated cured tire.

14. The segmented tire core structure of claim 11 wherein:
the axis of rotation of the first wheel and the axis of rotation of the second wheel are substantially collinear prior to rotation of the first and second wheels; and/or wherein:
after rotation of the first wheel, the first wheel, the first plurality of links and the first section of the segmented tire core are axially movable together away from the tire in a first direction, and
after rotation of the second wheel, the second wheel, the second plurality of links and the second section of the segmented tire core are axially movable together away from the tire in a second direction that is substantially opposite the first direction.

15. The segmented tire core structure of claim 11 wherein:
the segmented tire core further comprises third and fourth sections;
the segmented tire core removal system further comprises:
a third plurality of links comprising: a first link pivotally attached to the first wheel and pivotally attached to a second link that is attached to the third section of the associated segmented tire core, and
a fourth plurality of links comprising: a first link pivotally attached to the second wheel and pivotally attached to a second link that is attached to the fourth section of the associated segmented tire core,
wherein the first wheel is rotatable about its axis of rotation to cause the first and second links of the third plurality of links to move to consequently cause the third section to move away from the inner surface of the associated cured tire, and
wherein the second wheel is rotatable about its axis of rotation to cause the first and second links of the fourth plurality of links to move to consequently cause the fourth section to move away from the inner surface of the associated cured tire.
